# EUROPÄISCHE PATENTSCHRIFT

(11) **EP 2 207 694 B1**
(45) Veröffentlichungstag und Bekanntmachung des Hinweises auf die Patenterteilung: **16.02.2011**
(21) Anmeldenummer: 08785374.3
(22) Anmeldetag: 06.08.2008
(51) Int. Cl.: B60G 17/02, H02K 7/06, B60G 15/06, B60G 11/16

(54) **STELLVORRICHTUNG FÜR FEDERUNGSEINRICHTUNGEN**
ADJUSTING DEVICE FOR SPRING UNITS
DISPOSITIF DE REGLAGE POUR SYSTEMES D'AMORTISSEMENT

(30) Priorität: 31.10.2007 DE 102007051971
(43) Veröffentlichungstag der Anmeldung: 21.07.2010
(73) Patentinhaber: Audi AG, 85045 Ingolstadt (DE)
(72) Erfinder: OHLETZ, Armin, 85092 Kösching (DE); MICHEL, Wilfried, 93339 Riedenburg (DE)
(74) Vertreter: Asch, Konrad
(86) Internationale Anmeldenummer: PCT/EP2008/006449
(87) Internationale Veröffentlichungsnummer: WO 2009/056183

(56) Entgegenhaltungen:
- EP-A- 1 681 187
- EP-A- 1 681 189
- EP-A- 1 681 190
- EP-A- 1 820 673
- EP-A- 1 953 013
- EP-A- 1 970 228
- DE-A1- 10 122 542
- DE-A1- 10 144 111
- DE-A1- 10 345 987
- DE-A1- 19 955 410
- DE-B3-102004 014 336

## Beschreibung

Die Erfindung betrifft eine Stellvorrichtung für Federungseinrichtungen bei Radaufhängungen in Kraftfahrzeugen gemäß dem Oberbegriff des Patentanspruches 1.

Derartige Radaufhängungen mit teiltragenden, aktiven Federungseinrichtungen mit einer Tragfeder und einer Speicherfeder und einem elektrischen Aktuator zur Niveauregulierung und Wankstabilisierung der Karosserie des Kraftfahrzeuges sind bekannt, vgl. z. B. DE 199 55 410 A1 , DE 101 44 111 A1. Dabei kann an dem Stelltrieb des Aktuators auch eine elektromagnetisch betätigte Bremse oder Sperre vorgesehen sein, die den Stelltrieb in der jeweils eingestellten Position fixiert.

In der bekannten Radaufhängung erfolgt die Verstellung eines Federtellers, an den beiderseits sowohl die Tragfeder als auch die Speicherfeder abgestützt ist, über einen Elektromotor auf einen Kugelgewindetrieb. Dabei wird der gemeinsame Federfußpunkt von Speicherfeder und Tragfeder gemäß fahrdynamischer Erfordernisse in seiner Höhenposition verändert. D. h., der Elektromotor muss ständig mit mehr oder weniger Strom beaufschlagt sein. Beim Abstellen des Fahrzeugs muss auch in diesem Fall ein gewisser Ruhestrom fließen, um die konstante Höhenposition des Fahrzeugs zu gewährleisten. Bei einer Stromunterbrechung würde das Fahrzeug entsprechend seinem momentanen Beladungszustand soweit einsinken bis ein statisches Gleichgewicht zwischen Tragfeder oder Speicherfeder herrscht. Steht das Fahrzeug zufällig über einem Hindernis, etwa einem Bordstein, sind Folgeschäden möglich. So könnte etwa die Ölwanne oder die Karosserie beschädigt werden.

Darüberhinaus muss nicht nur beim Abstellen des Fahrzeugs der Elektromotor der Höhenverstellvorrichtung blockiert sein, sondern auch bei verschiedenen im Fahrbetrieb auftretenden Fehlerzuständen. So muss im Falle eines nicht vorhandenen oder fehlerhaften Stellsignals des Fahrzeugreglers sichergestellt sein, dass der Elektromotor in der Mittellage des Stellwegs zum Stehen kommt und durch die Arretierung auch gehalten wird.

Aufgabe der Erfindung ist es, eine Stellvorrichtung der gattungsgemäßen Art vorzuschlagen, die den Sicherheits- und Funktionsanforderungen im Fahrbetrieb des Kraftfahrzeuges vermehrt Rechnung trägt.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass der elektrische Aktuator mit einer integrierten Bremse oder Sperre versehen ist, die bistabil derart wirkt, dass sie in unbestromten Zustand eine offene oder geschlossene Stellung einnehmen kann und die mittels elektrischer Betätigung von der offenen in die geschlossene Stellung und umgekehrt umschaltbar ist. Erfindungsgemäß wurde erkannt, dass es bei den gattungsgemäßen Radaufhängungen besonders vorteilhaft ist, wenn aus fail-safe Betrachtungen bzw. bei Funktionsstörungen die Bremse oder Sperre (je nach Ausführung) in die offene oder geschlossene Stellung umschaltbar ist, ohne dass jedoch das bezügliche Stellelement (insbesondere ein elektromagnetisch betätigtes Stellelement) dauernd bestromt werden muss. Bistabile, bevorzugt elektromagnetisch betätigte Stellwerke sind aus anderen Anwendungsgebieten bekannt und dem Fachmann geläufig. Die Bremse bzw. Sperre greift dabei bevorzugt formschlüssig in eine zugeordnete Verzahnung eines Stellelements. Der Sperrenangriffspunkt und die Art des Eingriffes der Sperre ist erfindungsgemäß nicht festgelegt. So kann die Sperre im Elektromotor, Getriebe oder in der Trag- bzw. Ausgleichsfeder direkt angreifen. Der Sperreneingriff kann dabei form- oder kraftschlüssig erfolgen.

Wie aus obiger Beschreibung hervorgeht, kann die Sperre im stromlosen Zustand sowohl willkürlich offen als auch gesperrt sein. D. h., die Sperre kann aktiv verriegelt und aktiv entriegelt werden. Ein erster Stormimpuls kann dabei einem Verriegeln, ein weiterer einem Entriegeln, der nächste wieder einem Verriegeln usw. entsprechen. Die Sperre bzw. die Bremse ist als ein Rastgesperre ausgeführt.

Mit der Erfindung ist eine definierte Stillstandsposition des Elektromotors und damit eine definierte Fahrzeugtrimmlage im Stand gewährleistet. Die Ansteuerung der Arretierung der Stellvorrichtung kann je nach Ausführung von dezentralen Aktuator-Steuergeräten oder einem übergeordneten Zentralsteuergerät übernommen werden. Dabei kann die Sperre in jeder Betriebssituation einrasten. Im Falle eines nicht vorhandenen oder fehlerhaften Stellsignals des Fahrzeugreglers kann erfindungsgemäß der Elektromotor momentenfrei geschaltet werden. Durch die bewusste Ansteuerung der Arretierung ist darüberhinaus sichergestellt, dass in dem Augenblick der Aktuator auch im stromlosen Zustand nicht verriegelt ist. Denn für diesen Fehlerfall ist es gewollt, dass durch die äußeren Kräfte (auf Grund dem teiltragendem System aus Speicherfeder und Tragfeder) eine Stellspindel von selbst in eine kraftfreie Mittellage bewegt wird.

Da erfindungsgemäß die Sperre lediglich aktiv verriegelt und aktiv entriegelt wird ist auch keine Halte-Energie im Stand erforderlich. Eine Rückmeldung über die aktuelle Position des Elektromotors kann über einen Rotorlagesensor an die Leistungselektronik geleitet werden. Der Rotorlagesensor kann ortsfest positioniert sein.

So kann z. B. die Bremse oder Sperre in die geschlossene Stellung umgeschaltet werden, um die Verstellvorrichtung in der gerade eingestellten Position zu fixieren. Hierdurch wird vermieden, dass sich erhebliche Änderungen der Fahrzeugtrimmlage bei abgestelltem Fahrzeug gegenüber der Trimmlage im Fahrzeugbetrieb ergeben.

Ferner kann die Bremse oder Sperre in die "offen" Stellung umgeschaltet werden, wenn z. B. der Ausfall eines elektrischen Aktuators oder eine andere Fehlfunktion über die elektronische Fahrwerksregelung des Kraftfahrzeuges erkannt wird. Hierdurch wird ein unerwünschtes Halten des Aktuators in fahrdynamisch kritischen Zuständen vermieden.

In beiden Stellungen der Bremse oder Sperre kann diese nach dem Umschalten aufgrund deren bistabiler Betätigung bzw. Ausgestaltung unbestromt sein, also das elektrische Bordnetz des Kraftfahrzeuges nicht belasten; zudem muss das elektromagnetische Stellelement der Bremse oder Sperre nicht auf Dauerbelastung ausgelegt sein.

Lediglich beispielhaft kann eine bistabil wirkende Sperre mit einem über ein mechanisches Schrittschaltwerk betätigten Sperrstift ausgeführt sein, der in der geschlossenen Stellung in eine Verzahnung eines von dem Elektromotor des Aktuators betätigten Stellgliedes einrastet.

Bei einer formschlüssig wirkenden Sperre kann in vorteilhafter Weise der Sperrstift unter Zwischenschaltung einer Feder in der Sperrstellung federnd nachgiebig gegen die Verzahnung des Stellgliedes vorgespannt sein. Damit ist sichergestellt, dass die Sperre bei einer Überdeckung des Sperrstiftes mit einem Zahnkopf der Verzahnung nicht blockiert; sobald eine Überdeckung mit einer korrespondierenden Zahnlücke vorliegt, rastet der Sperrstift federbetätigt in die Zahnlücke ein.

Des Weiteren wird vorgeschlagen, dass das mit der Sperre zusammenwirkende Stellglied eine von dem Elektromotor betätigte Gewindespindel oder Kugelmutter eines auf die Speicherfeder wirkenden Kugelgewindetriebes ist. Derartige Triebe sind besonders leichtgängig und präzise ansteuerbar.

Dabei kann der Kugelgewindetrieb um einen Teleskop-Stopdämpfer der Radaufhängung des Kraftfahrzeuges und innerhalb einer schraubenförmigen Speicherfeder angeordnet sein, wobei die elektromagnetische Sperre in radialer Ausrichtung zur Gewindespindel oder Kugelmutter ortsfest angeordnet ist.

Ferner kann sich in baulich und fertigungstechnisch günstiger Weise das Schrittschaltwerk der elektromagnetischen Sperre im wesentlichen zusammensetzen aus einem von einem Hubmagneten betätigten Druckbolzen mit Anschubschrägen, einer ortsfesten Schaltkulisse, einer drehbar geführten Schaltkulisse und einem Übertragungsdorn, der über eine Stellhülse auf eine vorgespannte Rückführfeder und auf den Sperrstift wirkt.

Dabei kann räumlich günstig die den Sperrstift federnd nachgiebig beaufschlagende Feder innerhalb der Stellhülse angeordnet sein und den Sperrstift gegen eine Ringschulter der Stellhülse vorspannen.

Die Sperre mit dem Schrittschaltwerk kann zudem in vorteilhafter Weise in einer radial verlaufenden Bohrung einer Basisplatte angeordnet sein, die zudem den Elektromotor des Aktuators aufnimmt und an der aufbauseitig die Kolbenstange des Stoßdämpfers und die Speicherfeder abgestützt sind.

Schließlich kann in konstruktiv einfacher Weise die Verzahnung an der Gewindespindel des Kugelgewindetriebes eine stirnseitig der Gewindespindel eingearbeitete Kronenverzahnung sein. Die Kronenverzahnung kann auch direkt in den Rotor des Motorläufers integriert sein.

Mehrere Ausführungsbeispiele der Erfindung sind im Folgenden mit weiteren Einzelheiten näher erläutert. Die schematische Zeichnung zeigt in:
- Fig. 1: ein Ersatzschaltbild einer teiltragenden, aktiven Federungseinrichtung für Radaufhängungen von Kraftfahrzeugen, mit einer in Reihe geschal- teten Tragfeder und einer Speicherfeder, sowie mit einem elektrischen Aktuator mit einer bistabilen Bremse oder Sperre;
- Fig. 2: ein weiteres Ersatzschaltbild einer Federungseinrichtung nach Fig. 1, jedoch mit einer parallel zur Tragfeder angeordneten Speicherfeder;
- Fig. 3: in schematischer Schnittansicht ein Federbein einer Radaufhängung für Kraftfahrzeuge mit einem zentralen Teleskop-Stoßdämpfer, einer in Reihe geschalteten Tragfeder und Speicherfeder und mit einem elektri- schen Aktuator mit einem Kugelgewindetrieb und einer bistabilen Sperre;
- Fig. 4: in einer Detailschnittansicht die bistabile Sperre des in der Fig. 3 gezeigten Federbeins;
- Fig. 5: Einzelheiten der Sperre gemäß den Fig. 3 und 4 in raumbildlicher Explosionsdarstellung; und
- Fig. 6 und 7: in Detail-Schnittansichten die Sperre in einem geschlossenen Zustand.

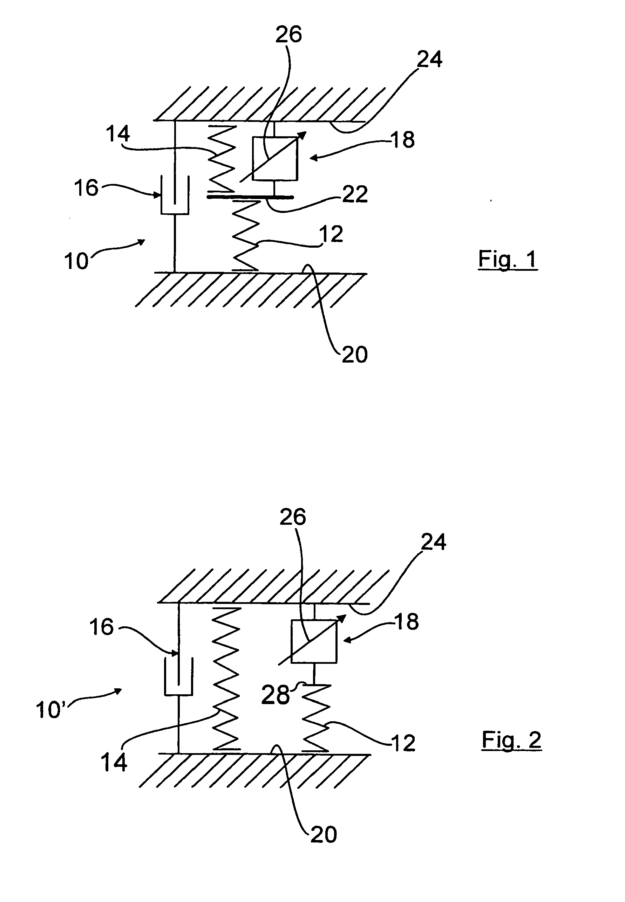

In der Fig. 1 ist eine teiltragende, aktive Federungs- und Dämpfungseinrichtung 10 für Radaufhängungen von Kraftfahrzeugen dargestellt, mit einer Tragfeder 12, einer Speicherfeder 14, einem Teleskop-Stoßdämpfer 16 und einem elektrischen Aktuator 18.

Die Tragfeder 12 und der Stoßdämpfer 16 sind an ihrem unteren Ende an einem Radführungselement 20 der Radaufhängung abgestützt; dies kann im Detail ein Radträger oder ein Lenker sein.

Das obere Ende der Tragfeder 12 stützt sich an einem verschiebbaren Federteller 22 ab, an dem in Reihenschaltung auch das untere Ende der Speicherfeder 14 abgestützt ist, die wiederum an ihrem oberen Ende wie der Stoßdämpfer 16 am Aufbau 24 des Kraftfahrzeuges abgestützt ist. Der Aufbau 24 umfasst sowohl die Karosserie als auch den Achsträger.

Der verstellbare Federteller 22 kann mittels des zwischen den Aufbau 24 und den verstellbaren Federteller 22 geschalteten, elektrischen Aktuators 18 höhenverstellt werden, wodurch der obere Federfußpunkt der Tragfeder 12 relativ zum Aufbau 24 zur Niveauregulierung und/oder Wankstabilisierung der Karosserie (Aufbau 24) des Kraftfahrzeuges aktiv verstellt wird.

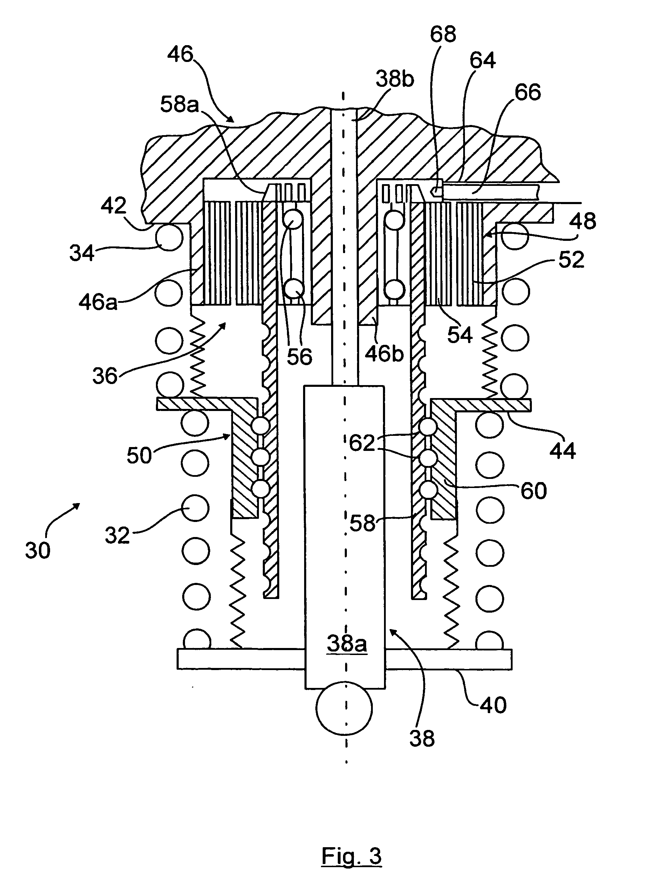

Der Aktuator 18 setzt sich in an sich bekannter Weise zusammen aus einem Elektromotor und einem auf den verstellbaren Federteller 22 wirkenden Stelltrieb (vgl. z.B. die folgenden Fig. 3 bis 5).

In dem Aktuator 18 ist eine elektromagnetisch betätigte Bremse oder Sperre (angedeutet durch den Pfeil 26) vorgesehen, die bistabil wirkend im unbestromten (nicht angesteuerten) Zustand offen oder geschlossen sein kann. Eine Ansteuerung der Bremse oder Sperre 26 ist nur zum Umschalten von der offenen Stellung in die geschlossene Stellung und umgekehrt erforderlich.

Bei einem nicht selbsthemmenden Stelltrieb des Aktuators 18 bedeutet dies, dass der Federteller 22 mit dem Stelltrieb in der geschlossenen Stellung der Bremse oder der Sperre 26 dauerhaft und ohne Strombeaufschlagung fixiert ist und somit eine eingestellte Höhenposition der Federungseinrichtung 10 sicherstellt.

In der geöffneten Stellung der Bremse oder Sperre 26 ist andererseits vorgegeben, dass durch die sich selbsttätig ergebende Verstellung des Stelltriebes des Aktuators 18 die Federungseinrichtung 10 eine konstruktiv vorgegebene Grundstellung einnehmen kann, in der sich die Tragfeder 12 und die Speicherfeder 14 in einem Kräftegleichgewicht befinden.

Es sei an dieser Stelle bemerkt, dass bei einer Fahrwerksregelung der beschriebenen Art schnelle Ansprechzeiten (z. B. bei einer Wankstabilisierung) erforderlich sind, die entsprechend leichtgängige Stelltriebe des Aktuators 18 bedingen. Insbesondere (wenn auch nicht ausschließlich) für solche Stelltriebe ist die Anordnung einer bistabilen Bremse oder Sperre besonders vorteilhaft.

Die Fig. 2 zeigt eine alternative Ausgestaltung der Federungseinrichtung 10'. Zur Vermeidung von Wiederholungen sind nur die wesentlichen Unterschiede beschrieben. Funktionell gleiche Teile sind mit gleichen Bezugszeichen versehen.

Gemäß Fig. 2 sind die Tragfeder 12 und die Speicherfeder 14 parallel geschaltet. D.h., dass die Speicherfeder 14 wie der Stoßdämpfer 16 am unteren Ende an dem Radführungselement 20 und am oberen Ende am Aufbau 24 abgestützt ist.

Die Tragfeder 12 liegt in Reihe mit dem elektrischen Aktuator 18, der einerseits am Aufbau 24 und andererseits an einem verstellbaren Federteller 28 angreift; die Tragfeder 12 stützt sich an ihrem unteren Ende ebenfalls an einem Radführungselement 20 ab (das nicht mit dem Radführungselement 20 der Speicherfeder 14 übereinstimmen muss).

In dem Aktuator 18 ist wiederum eine bistabile Bremse oder Sperre 26 wie vorstehend beschrieben angeordnet. Die Funktion der Federungseinrichtung 10' ist im Wesentlichen gleich der Federungseinrichtung 10 der Fig. 1. Durch Bewegen des Federfußpunktes 28 durch den Aktuator 18 wird die Kraft zwischen dem Aufbau 24 (Achsträger oder Karosserie) und dem Radführungselement vergrößert oder verkleinert und mit der Bremse oder Sperre 26 gehalten (geschlossene Stellung) oder zum Einnehmen einer Grundstellung freigegeben (offene Stellung).

Zu den Darstellungen der Fig. 1 und 2 sei folgendes bemerkt:

Die Tragfeder 12 und/oder die Speicherfeder 14 können auch Federn anderer Art als Schraubendruckfedern sein, z.B. Drehstabfedern oder Kombinationen daraus. Die Federungseinrichtungen 10, 10' können ferner an Federbein-Ausführungen oder Lenkerkombinationen von Radaufhängungen für gelenkte oder ungelenkte Räder des Kraftfahrzeuges vorgesehen sein.

Außerdem können die Kraftangriffspunkte der Kraftelemente (Dämpfer, Aktuator, Feder) abweichend zu den Fig. 1 und 2 wahlweise an der Karosserie oder dem Achsträger (oben) oder Radführungselement (Radträger, Lenker) (unten) sein. Nicht alle Kraftelemente müssen den gleichen Kraftangriffspunkt haben.

Die Betätigung der Sperre 26 kann elektrisch oder elektromagnetisch über ein elektronisches Steuergerät gesteuert werden, wobei die Steuerung eine feed back Einrichtung zum Erfassen des Schaltzustandes der Brem-se oder der Sperre 26 aufweisen kann.

In den Fig. 3 bis 5 ist eine an einem Federbein 30 für eine Radaufhängung eines Kraftfahrzeuges dargestellte Stellvorrichtung für die teiltragende, aktive Federungseinrichtung dargestellt, die sich im Wesentlichen aus einer Tragfeder 32, einer in Reihe geschalteten Speicherfeder 34, und einem elektrischen Aktuator 36 zusammensetzt.

Die als Schraubendruckfedern ausgeführten Federn 32, 34 sind in der Fig. 3 um einen zentralen Teleskop-Stoßdämpfer 38 angeordnet und stützen sich an einem unteren Federteller 40, an einer oberen Federaufnahme 42 und beiderseits an einem axial verstellbar geführten Verstellfederteller 44 ab.

Der untere Federteller 40 ist an dem Zylinderrohr 38a des Stoßdämpfers 38 befestigt. Das Zylinderrohr 38a ist an seinem unteren Ende an einem nicht dargestellten Radführungselement angelenkt; ferner ist die Kolbenstange 38b des Stoßdämpfers 38 in nicht dargestellter Weise über ein schwingungsdämpfendes Lager und eine ringförmige Basisplatte 46 mit dem Aufbau des Kraftfahrzeuges verbunden.

Der Aktuator 36 weist einen hohlzylindrischen Elektromotor 48 und einen Stelltrieb 50 auf. Der Elektromotor 48 ist mit seinem Stator 52 und Rotor 54 innerhalb eines rohrförmigen Fortsatzes 46a der Basisplatte 46 angeordnet.

Der Stelltrieb 50 ist ein Kugelgewindetrieb mit einer drehbar, aber axial unverschiebbar über ein Vier-Punkt-Lager 56 auf einer Führungshülse 46b der Basisplatte gelagerten Gewindespindel 58, einer Kugelmutter 60 und dazwischen befindlichen Wälzelementen bzw. Kugeln 62. Die Kugelmutter 60 ist einstückig mit dem Verstellfederteller 44 ausgeführt. Ferner ist die Gewindespindel 58 dreh-fest mit dem Rotor 54 des Elektromotors 48 verbunden.

Durch Ansteuerung des Elektromotors 48 kann über den die Gewindespindel 58 antreibenden Rotor 54 die Kugelmutter 60 mit dem Federteller 44 höhenverstellt werden, wobei wie vorbeschrieben die Fußpunktauflage der Tragfeder 32 relativ zur Basisplatte 46 bzw. zum Aufbau des Kraftfahrzeuges zur Durchführung einer Niveauverstellung oder zu einer Wankstabilisierung des Kraftfahrzeuges verstellt werden kann.

In eine etwa radial ausgerichtete Bohrung 64 in der Basisplatte 46 ist eine bistabil wirkende Sperre 66 eingesetzt, die in der Fig. 3 grob schematisch dargestellt ist. Die Sperre 66 weist einen radial verstellbaren Sperrstift 68 auf, der in eine stirnseitig in die Gewindespindel 58 eingearbeitete Kronen-Verzahnung 58a formschlüssig eingreifen kann.

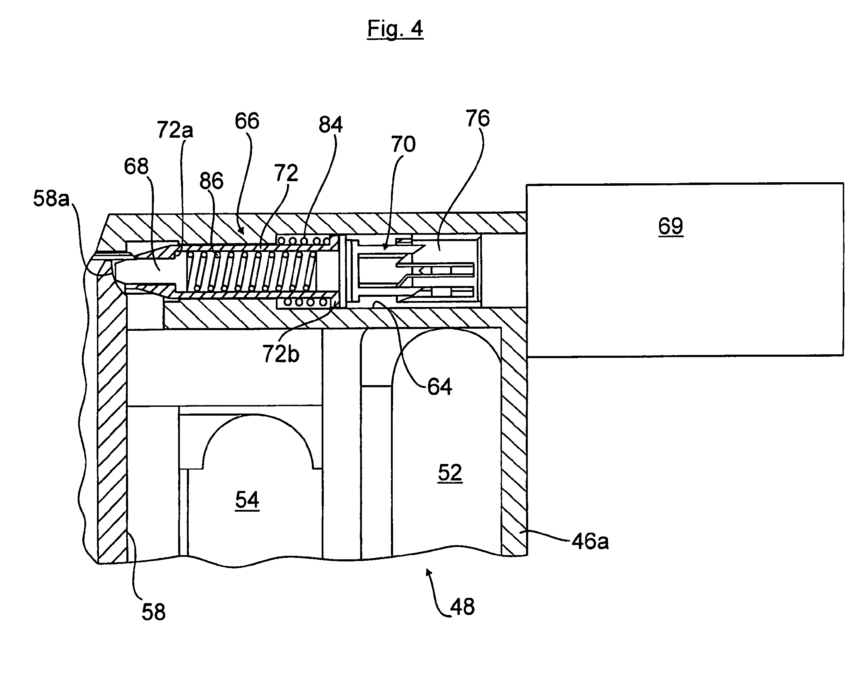

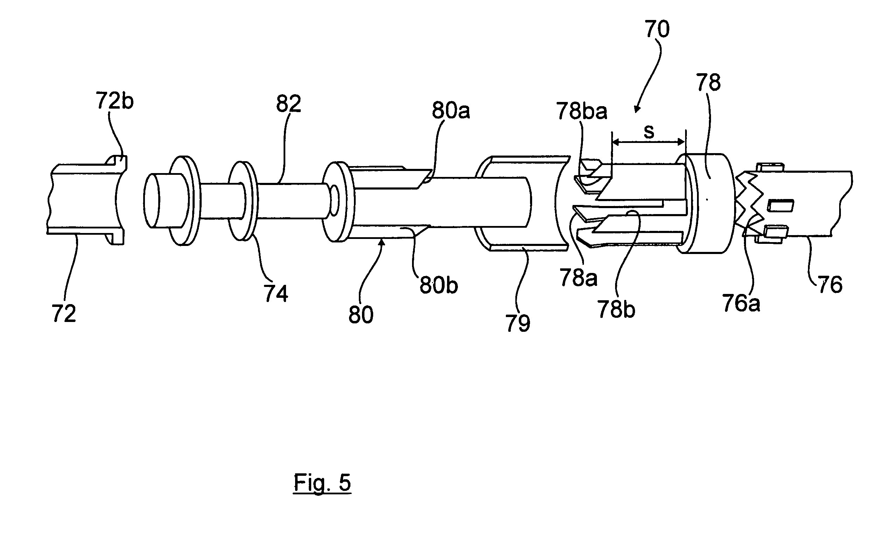

Die allgemein mit 66 bezeichnete Sperre setzt sich gemäß den Fig. 4 und 5 wie folgt zusammen:

Die Sperre 66 weist im Wesentlichen ein elektromagnetisches Stellglied 69 mit einem Hubmagneten (nicht dargestellt), ein mechanisches Schrittschaltwerk 70 und den axial verschiebbar in einer Stellhülse 72 aufgenommenen Sperrstift 68 auf.

Das Schrittschaltwerk 70 der Sperre 66 setzt sich dabei im wesentlichen zusammen aus einem von dem Hubmagneten des Stellgliedes 69 betätigten Druckbolzen 76 (vgl. insbesondere Fig. 5) mit Anschubschrägen 76a, einer ortsfesten Schaltkulisse 78, einer drehbar geführten Schaltkulisse 80 und einem Übertragungsdorn 82, der über die Stellhülse 72, eine Anlaufscheibe 74 und einen Ringbund 72b der Stellhülse 72 auf eine vorgespannte Rückführfeder 84 (Fig. 4) und auf den Sperrstift 68 wirkt. Um die ortsfeste Schaltkulisse 78 ist zudem eine Führungshülse 79 vorgesehen.

Der Sperrstift 68 ist über eine weitere Schraubendruck-Feder 86 federnd nachgiebig innerhalb der Stellhülse 72 angeordnet, wobei die Feder 86 den Sperrstift 68 gegen eine Ringschulter 72a der Stellhülse 72 vorspannt. Der Sperrstift 68 ist wie ersichtlich zum besseren Einrasten in die Verzahnung 58a der Gewindespindel 58 konisch sich verjüngend ausgebildet.

Das dargestellte Schrittschaltwerk 70 in Verbindung mit dem elektromagnetischen Stellglied 69 wirkt folgendermaßen:

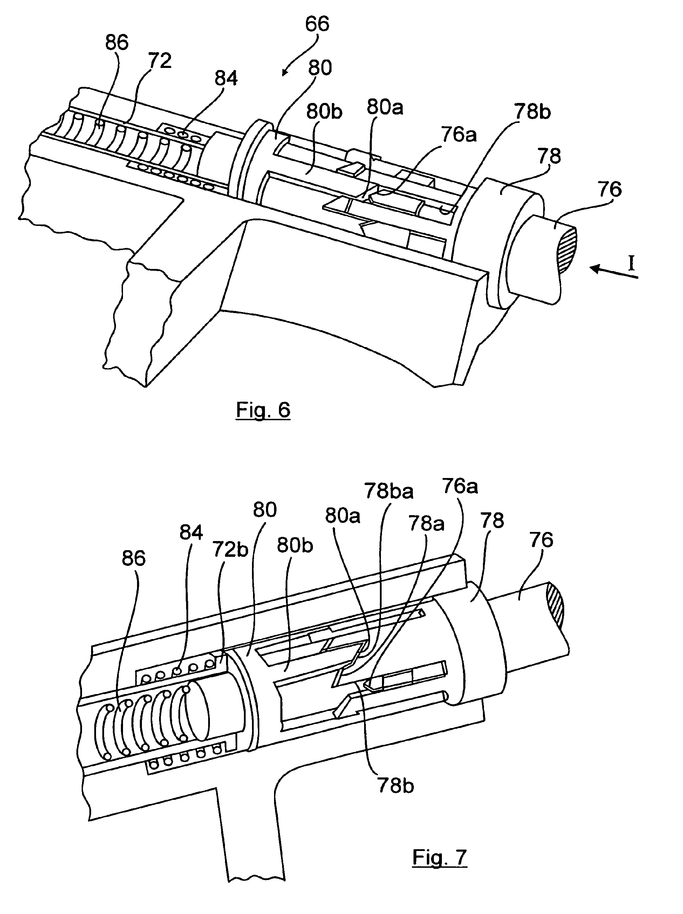

Wird das Stellglied 69 elektrisch angesteuert, so fährt gemäß der Fig. 6 der über den Hubmagneten betätigte, unverdrehbar geführte und die hülsenförmige Schaltkulisse 78 durchdringende Druckbolzen 76 in der Pfeilrichtung I mit den stirnseitigen Anschubschrägen 76a aus und verdreht im Zusammenwirken mit stirnseitigen Anschrägungen 80a an radial abragenden Axialstegen 80b die Schaltkulisse 80 um ein definiertes, durch die Schrägflächen 78a, 80a vorgegebenen Maß. In der Fig. 6 ist die Sperre 66 in ihrer geschlossenen Stellung gezeigt.

Beim Ausfahren des Druckbolzens 76 in der Pfeilrichtung I geraten zugleich die Axialstege 80b der Schaltkulisse 80 außer Eingriff mit schlitzförmigen Axialnuten 78b der ortsfesten Schaltkulisse 78. Die Verdrehung der Schaltkulisse 80 mit deren gleichzeitigem Verschieben in axialer Richtung ist derart, dass mit jeder axial gerichteten Betätigung des Druckbolzens 76 die Axialstege 80b bei der Rückstellung der Schaltkulisse 80 über die Rückführfeder 84 in die jeweils benachbarte Axialnut 78b der ortsfesten Schaltkulisse 78 einfahren.

Die Schaltkulisse 80 weist dazu vier Axialstege 80b und die Schaltkulisse 78 acht Axialnuten 78b auf, wobei eine Axialnut 78ba um den Abstand s (Fig. 5) kürzer ausgeführt ist. Durch diese Auslegung des Schrittschaltwerkes 70 wirkt mit jedem Ansteuern des Hubmagneten des elektromagnetischen Stelltriebes 69 entweder ein Axialsteg 80b der Schaltkulisse 80 mit der verkürzten Axialnut 78ba derart zusammen, dass der Sperrstift 68 mit der Stellhülse 72 in die Verzahnung 58a der Gewindespindel 58 des Stelltriebes 50 einfährt und gehalten wird (geschlossene Stellung) oder dass bei einem weiteren Ansteuern des Hubmagneten die Schaltkulisse 80 verdreht und die Axialstege 80b in die längeren Axialnuten 78b einfahren, wobei dann die Rückführfeder 84 die Stellhülse 72 mit dem Sperrstift 68 zurückstellt (Offenstellung). Die beschriebenen "geschlossen" oder "offen" Stellungen wechseln alternierend mit jedem Ansteuern des elektromagnetischen Stellgliedes 69 ab.

So ist in der Fig. 7 der geschlossene Zustand der Sperre 66 gezeigt, in dem ein Axialsteg 80b der drehbaren und axialen verschiebbaren Schaltkulisse 80 in die verkürzte Axialnut 78ba eingefahren ist. In diesem Fall ist der Sperrstift 68 in Rasteingriff mit der Verzahnung 58a der Gewindespindel 58 des Stelltriebes 50.

Sollte bei Einfahren des Sperrstiftes 68 mit der Stellhülse 72 des Schrittschaltwerkes 70 der Sperrstift 68 an einem Zahnkopf der Kronenverzahnung 58a der Gewindespindel 58 zur Anlage kommen, so kann der Sperrstift 68 aufgrund der Feder 86 in die Stellhülse 72 einfahren und ist in dieser Stellung federnd vorgespannt. Der Sperrstift 68 rastet dann bei einer geringen Relativbewegung zwischen der Verzahnung 58a und dem Sperrstift 68 in die nächstliegende Zahnlücke der Verzahnung 58a ein.

Anstelle der Gewindespindel 58 kann bei einem entsprechend ausgeführten Kugelgewindetrieb 50 auch in kinematischer Umkehrung die Kugelmutter 60 relativ zur Gewindespindel 58 verdrehbar angeordnet und über den Elektromotor 48 antreibbar sein, wobei die besagte Verzahnung oder Kronenverzahnung 58a dann an der Kugelmutter 60 vorzusehen ist.

## Patentansprüche

1. Stellvorrichtung für Federungseinrichtungen bei Radaufhängungen von Kraftfahrzeugen, wobei die Federungseinrichtung (10) eine zwischen dem Aufbau (24) des Kraftfahrzeuges und Radführungselementen (20) angeordnete Feder (12; 32) sowie einen elektrisch betätigten Aktuator (18; 36) aufweist, mittels dem eine Kraftverstellung zwischen dem Kraftfahrzeugaufbau (24) und den Radführungselementen (20) ermöglicht ist, wobei der elektrische Aktuator (18; 36) mit einer integrierten Bremse oder Sperre (26; 66) versehen ist, **dadurch gekennzeichnet, dass** die integrierte Bremse oder Sperre (26; 66) bistabil derart wirkt, dass sie im unbestromten Zustand eine offene oder geschlossene Stellung einnehmen kann, und die mittels elektrischer Betätigung von der offenen in die geschlossene Stellung und umgekehrt umschaltbar ist.

2. Stellvorrichtung nach Anspruch 1, **gekennzeichnet durch** eine bistabil wirkende Sperre (66) mit einem insbesondere über ein mechanisches Schrittschaltwerk (70) betätigten Sperrstift (68), der insbesondere in der geschlossenen Stellung in eine Verzahnung (58a) eines von dem Elektromotor (48) des Aktuators (36) betätigten Stellglieds (58) einrastet.

3. Stellvorrichtung nach Anspruch 2, **dadurch gekennzeichnet, dass** der Sperrstift (68) unter Zwischenschaltung einer Feder (86) in der Sperrstellung federnd nachgiebig gegen die Verzahnung (58a) des Stellgliedes (58) vorgespannt ist.

4. Stellvorrichtung nach einem der vorhergehenden Ansprüche, **dadurch gekennzeichnet, dass** ein Schrittschaltwerk (70) der elektromagnetischen Sperre (66) im wesentlichen zusammensetzt aus einem von einem Hubmagneten (69) betätigten Druckbolzen (76) mit Anschubschrägen (76a), einer ortsfesten Schaltkulisse (78), einer verdrehbar geführten Schaltkulisse (80) und einem Übertragungsdorn (82), der über eine Stellhülse (72) auf eine vorgespannte Rückführfeder (84) und auf den Sperrstift (68) wirkt.

5. Stellvorrichtung nach Anspruch 4, **dadurch gekennzeichnet, dass** der Kugelgewindetrieb (50) um einen Teleskop-Stoßdämpfer (38) der Radaufhängung des Kraftfahrzeuges und innerhalb der schraubenförmigen Speicherfeder (34) angeordnet ist und dass die elektromagnetische Sperre (66) in radialer Ausrichtung zur Gewindespindel (58) oder Kugelmutter (60) ortsfest angeordnet ist.

6. Stellvorrichtung nach einem der vorhergehenden Ansprüche, **dadurch gekennzeichnet, dass** ein mit dem Sperrstift (68) der Sperre (66) zusammenwirkendes Stellglied (58) eine von dem Elektromotor (48) betätigte Gewindespindel (58) oder eine Kugelmutter (60) eines auf die Speicherfeder (34) wirkenden Kugelgewindetriebes (50) ist.

7. Stellvorrichtung nach einem der Ansprüche 3 bis 6, **dadurch gekennzeichnet, dass** die den Sperrstift (68) federnd nachgiebig beaufschlagende Feder (86) innerhalb einer Stellhülse (72) angeordnet ist und den Sperrstift (68) gegen eine Ringschulter (72a) der Stellhülse (72) vorspannt.

8. Stellvorrichtung nach einem der vorhergehenden Ansprüche, **dadurch gekennzeichnet, dass** die Verzahnung (58a) unmittelbar an einem Rotor (54) des Elektromotors (48) vorgesehen ist.

9. Stellvorrichtung nach einem der Ansprüche 2 bis 7, **dadurch gekennzeichnet, dass** die Sperre (66) in einer radial verlaufenden Bohrung (64) einer Basisplatte (46) angeordnet ist, die vorzugsweise zudem den Elektromotor (48) des Aktuators (36) aufnimmt und/oder an der aufbauseitig die Kolbenstange (38b) des Stoßdämpfers (38) und die Speicherfeder (34) abgestützt sind.

10. Stellvorrichtung nach einem der vorhergehenden Ansprüche, **dadurch gekennzeichnet, dass** eine der Sperre (26; 66) zugeordnete Verzahnung an der Gewindespindel (58) des Kugelgewindetriebes (50) eine stirnseitig der Gewindespindel (58) eingearbeitete Kronenverzahnung (58a) ist.

11. Stellvorrichtung nach einem der vorhergehenden Ansprüche, **dadurch gekennzeichnet, dass** im Falle von auftretenden Fehlern an mindestens einem Aktuator (18; 36) die Sperre oder Bremse (26; 66) an mindestens einem Aktuator gelöst wird, um ein Failsafe-Verhalten zu erreichen.

12. Stellvorrichtung nach einem der vorhergehenden Ansprüche, **dadurch gekennzeichnet, dass** die Anforderung zur Sperrenöffnung von einem übergeordneten Fahrzeugsteuergerät entweder an ein Aktuatorsteuergerät oder direkt an die Sperre bzw. Bremse (26; 66) gesendet wird.

13. Stellvorrichtung nach einem der vorhergehenden Ansprüche, **dadurch gekennzeichnet, dass** neben der als Tragfeder wirkenden Feder (12; 32) eine parallel oder in Reihe geschaltete Speicherfeder (14) vorgesehen ist.

## Claims

1. Adjusting device for spring units in wheel suspensions of motor vehicles, with the spring unit (10) having a spring (12; 32) which is arranged between the body (24) of the motor vehicle and wheel control elements (20) and also having an electrically actuated actuator (18; 36) which makes it possible to perform a force adjustment between the motor vehicle body (24) and the wheel control elements (20), with the electric actuator (18; 36) being provided with an integrated brake or lock (26; 66), **characterized in that** the integrated brake or lock (26; 66) acts in a bistable manner in such a way that it can assume an open or closed position in the currentless state and can be switched from the open position into the closed position and vice versa by means of electric actuation.

2. Adjusting device according to Claim 1, **characterized by** a bistably acting lock (66) with a locking pin (68) which is actuated in particular by means of a mechanical step switching mechanism (70) and which in particular in the closed position latches into a toothing (58a) of an adjusting member (58) actuated by the electric motor (48) of the actuator (36).

3. Adjusting device according to Claim 2, **characterized in that** the locking pin (68), in the locking position, is preloaded against the toothing (58a) of the adjusting member (58) in a resiliently flexible manner with the interposition of a spring (86).

4. Adjusting device according to one of the preceding claims, **characterized in that** a step switching mechanism (70) of the electromagnetic lock (66) is composed substantially of a thrust bolt (76) which is actuated by a stroke magnet (69) and which has thrust chamfers (76a), of a positionally fixed switching slotted piece (78), of a rotatably guided switching slotted piece (80) and of a transmission peg (82) which acts via an adjusting sleeve (72) on a preloaded return spring (84) and on the locking pin (68).

5. Adjusting device according to Claim 4, **characterized in that** the ball screw drive (50) is arranged around a telescopic shock absorber (38) of the wheel suspension of the motor vehicle and within the helical store spring (34), and **in that** the electromagnetic lock (66) is positionally fixedly arranged in a radial alignment with respect to the threaded spindle (58) or ball nut (60).

6. Adjusting device according to one of the preceding claims, **characterized in that** an adjusting member (58) which interacts with the locking pin (68) of the lock (66) is a threaded spindle (58) actuated by the electric motor (48) or is a ball nut (60) of a ball screw drive (50) which acts on the store spring (34).

7. Adjusting device according to one of Claims 3 to 6, **characterized in that** the spring (86) which acts in a resiliently flexible manner on the locking pin (68) is arranged within an adjusting sleeve (72) and preloads the locking pin (68) against an annular shoulder (72a) of the adjusting sleeve (72).

8. Adjusting device according to one of the preceding claims, **characterized in that** the toothing (58a) is provided directly on a rotor (54) of the electric motor (48).

9. Adjusting device according to one of Claims 2 to 7, **characterized in that** the lock (66) is arranged in a radially running bore (64) in a base plate (46) which preferably also holds the electric motor (48) of the actuator (36) and/or on which the piston rod (38b) of the shock absorber (38) and the store spring (34) are supported at the body side.

10. Adjusting device according to one of the preceding claims, **characterized in that** a toothing, which is assigned to the lock (26; 66), on the threaded spindle (58) of the ball screw drive (50) is a crown toothing (58a) formed into the end side of the threaded spindle (58).

11. Adjusting device according to one of the preceding claims, **characterized in that**, in the event of failure of at least one actuator (18, 36), the lock or brake (26; 66) on at least one actuator is released in order to provide fail-safe behaviour.

12. Adjusting device according to one of the preceding claims, **characterized in that** the demand for opening the lock is transmitted by a superordinate vehicle control unit either to an actuator control unit or directly to the lock or brake (26; 66).

13. Adjusting device according to one of the preceding claims, **characterized in that**, in addition to the spring (12; 32) which acts as a load-bearing spring, there is provided a store spring (14) connected in parallel or in series.

## Revendications

1. Dispositif de réglage pour systèmes d'amortissements dans des suspensions de roues de véhicules automobiles, le système d'amortissement (10) présentant un ressort (12 ; 32) disposé entre la carrosserie (24) du véhicule automobile et des éléments de guidage des roues (20) et un actionneur (18 ; 36) à commande électrique, au moyen duquel un réglage de la force entre la carrosserie du véhicule automobile (24) et les éléments de guidage des roues (20) est possible, l'actionneur électrique (18 ; 36) étant pourvu d'un frein ou d'une immobilisation intégré(e) (26 ; 66), **caractérisé en ce que** le frein ou l'immobilisation intégré(e) (26 ; 66) agit de manière bistable de telle sorte qu'il ou elle puisse adopter une position ouverte ou fermée dans l'état non alimenté en courant, qui peut être commutée au moyen d'une commande électrique de la position ouverte dans la position fermée et inversement.

2. Dispositif de réglage selon la revendication 1, **caractérisé par** une immobilisation agissant de manière bistable (66) avec une goupille d'immobilisation (68) commandée notamment par le biais d'un mécanisme pas à pas (70) mécanique, qui s'encliquète notamment dans la position fermée dans une denture (58a) d'un organe de réglage (58) commandé par le moteur électrique (48) de l'actionneur (36).

3. Dispositif de réglage selon la revendication 2, **caractérisé en ce que** la goupille d'immobilisation (68) est précontrainte en interposant un ressort (86) dans la position d'immobilisation, de manière élastiquement flexible, contre la denture (58a) de l'organe de réglage (58).

4. Dispositif de réglage selon l'une quelconque des revendications précédentes, **caractérisé en ce qu'**un mécanisme pas à pas (70) de l'immobilisation électromagnétique (66) se compose essentiellement d'un boulon de pression (76) commandé par un électroaimant de levage (69) avec des biseaux de poussée (76a), d'une coulisse de commutation fixe (78), d'une coulisse de commutation (80) guidée de manière rotative, et d'un mandrin de transfert (82), qui agit par le biais d'un manchon de réglage (72) sur un ressort de rappel précontraint (84) et sur la goupille d'immobilisation (68).

5. Dispositif de réglage selon la revendication 4, **caractérisé en ce que** la vis d'entraînement à billes (50) est disposée autour d'un amortisseur télescopique (38) de la suspension des roues du véhicule automobile et à l'intérieur du ressort d'accumulation hélicoïdal (34) et **en ce que** l'immobilisation électromagnétique (66) est disposée fixement dans une orientation radiale par rapport à la broche filetée (58) ou à l'écrou à bille (60).

6. Dispositif de réglage selon l'une quelconque des revendications précédentes, **caractérisé en ce qu'**un organe de réglage (58) coopérant avec la goupille d'immobilisation (68) de l'immobilisation (66) est une broche filetée (58) commandée par le moteur électrique (48) ou un écrou à bille (60) d'une vis d'entraînement à billes (50) agissant sur le ressort d'accumulation (34).

7. Dispositif de réglage selon l'une quelconque des revendications 3 à 6, **caractérisé en ce que** le ressort (86) sollicitant de manière élastiquement flexible la goupille d'immobilisation (68) est disposé à l'intérieur d'un manchon de réglage (72), et précontraint la goupille d'immobilisation (68) contre un épaulement annulaire (72a) du manchon de réglage (72).

8. Dispositif de réglage selon l'une quelconque des revendications précédentes, **caractérisé en ce que** la denture (58a) est prévue directement sur un rotor (54) du moteur électrique (48).

9. Dispositif de réglage selon l'une quelconque des revendications 2 à 7, **caractérisé en ce que** l'immobilisation (66) est disposée dans un alésage (64) s'étendant radialement d'une plaque de base (46), qui reçoit de préférence en outre le moteur électrique (48) de l'actionneur (36) et/ou sur laquelle, du côté de la carrosserie, la tige de piston (38b) de l'amortisseur (38) et le ressort d'accumulation (34) sont supportés.

10. Dispositif de réglage selon l'une quelconque des revendications précédentes, **caractérisé en ce qu'**une denture associée à l'immobilisation (26 ; 66) sur la broche filetée (58) de la vis d'entraînement à billes (50) est une denture de couronne (58a) pratiquée du côté frontal de la broche filetée (58).

11. Dispositif de réglage selon l'une quelconque des revendications précédentes, **caractérisé en ce que** dans le cas de défaillances se produisant au niveau d'au moins un actionneur (18 ; 36), l'immobilisation ou le frein (26 ; 66) au niveau d'au moins un actionneur est libéré(e), afin d'obtenir un comportement à sécurité intégrée.

12. Dispositif de réglage selon l'une quelconque des revendications précédentes, **caractérisé en ce que** l'ordre d'ouverture de l'immobilisation est envoyé par un appareil de commande maître du véhicule de supervision, soit à un appareil de commande d'actionneur soit directement à l'immobilisation ou au frein (26 ; 66).

13. Dispositif de réglage selon l'une quelconque des revendications précédentes, **caractérisé en ce que** l'on prévoit en plus du ressort (12 ; 32) agissant en tant que ressort de support, un ressort d'accumulation (14) monté en parallèle ou en série.
